Europäisches Patentamt

European Patent Office

Office européen des brevets

(19)

(11) Veröffentlichungsnummer: **0 210 974**
**B1**

(12) **EUROPÄISCHE PATENTSCHRIFT**

(45) Veröffentlichungstag der Patentschrift: **24.10.90**

(51) Int. Cl.⁵: **B 25 J 5/04**

(21) Anmeldenummer: **86890183.6**

(22) Anmeldetag: **19.06.86**

(60) Teilanmeldung **89102388.9 eingereicht am 19/06/86.**

(54) Industrieroboter.

(30) Priorität: **25.07.85 AT 2210/85**

(43) Veröffentlichungstag der Anmeldung:
**04.02.87 Patentblatt 87/06**

(45) Bekanntmachung des Hinweises auf die
Patenterteilung:
**24.10.90 Patentblatt 90/43**

(84) Benannte Vertragsstaaten:
**DE FR GB IT SE**

(56) Entgegenhaltungen:
**DD-A- 207 878**
**DD-A- 235 595**
**FR-A-2 552 411**
**GB-A-2 121 373**
**US-A-4 234 223**

**PATENT ABSTRACTS OF JAPAN, unexamined
applications, May 30, 1978, M Section, Vol.2, Nr.
71, THE PATENT OFFICE JAPANESE
GOVERNMENT Seite 1599 M78**

(73) Patentinhaber: **Winter, Alfred**
**Heinrich-Collin-Strasse 36**
**A-1140 Wien (AT)**
(73) Patentinhaber: **Schendl, Adolf, Dipl.-Ing.**
**Mautner-Markhof-Gasse 13**
**A-1110 Wien (AT)**

(72) Erfinder: **Winter, Alfred**
**Heinrich-Collin-Strasse 36**
**A-1140 Wien (AT)**
Erfinder: **Schendl, Adolf, Dipl.-Ing.**
**Mautner-Markhof-Gasse 13**
**A-1110 Wien (AT)**

(74) Vertreter: **Köhler-Pavlik, Johann, Dipl.-Ing.**
**Margaretenplatz 5**
**A-1050 Wien (AT)**

Courier Press, Leamington Spa, England.

## Beschreibung

Die Erfindung betrifft einen Industrieroboter der Portalbauweise für Handhabungs- und/oder Fertigungs-und/oder Prüfaufgaben an einem Werkstück, Geräteteil od.dgl. in X-und/oder Y-Richtung sowie in Z-Richtung, bestehend aus einem mittels zumindest vier Rollen auf einer Brücke fahrbar gelagerten Wagen, auf welchem eine Rollenführung für einen lotrecht verschiebbaren Holm oder Träger angeordnet ist, an dessen unterem Ende eine Greifvorrichtung für das Werstück od.dgl. angebracht ist, zwei im Abstand zueinander angeordneten und an den Enden miteinander verbundenen Querträgern, welche die Brücke bilden, die wahlweise an den Enden je auf Endstützen und erforderlichenfalls dazwischen auf Zwischenstützen abgestützt ist, oder an den Enden zumindest je zwei Rollen trägt, die auf zwei im rechten Winkel zur Brücke und im Abstand zueinander angeordneten Längsträgern laufen, die an den Enden je auf Endstützen und erforderlichenfalls dazwischen auf Zwischenstützen abgestützt sind, sowie mit Antriebseinrichtungen für die Bewegung des Wagens, des Holms oder Trägers und gegebenenfalls der Brücke, wobei die Greifvorrichtung gegebenenfalls mit zumindest einer Antriebseinrichtung zum Verdrehen der Greifvorrichtung um zumindest eine Drehachse ausgestattet ist.

Zu den wichtigsten Auswahlkriterien bei Industrierobotern zählen Traglast, Wiederholgenauigkeit, Verfahrweg, Geschwindigkeit und Beschleunigung. Die Traglast bekannter Portalgeräte bewegt sich zwischen 10 und 100 kg, bei einer Wiederholgenauigkeit von ±0,025 bis 1 mm, bei Geschwindigkeiten von 0,2 bis 2 m/s, und bei Verfahrwegen von 0,4 bis 15 m in X-Richtung, 0,5 bis 5 m in Y-Richtung und 0,1 bis 2 m in Z-Richtung.

Durch die FR-PS 2 527 965 ist eine durch ein rhombusförmiges Profil erzielte Führung von teilweise federnd gelagerten Rollen auf schrägen Flächen bekannt geworden. Das rhombusförmige Profil muß zur Gänze aus einem hochwertigen Material bestehen, was einen beträchtlichen Aufwand verursacht. Die Lagerung ist so getroffen, daß die Rollen einzeln gefedert sind. Hiebei geht vom Lager der Rollen ein Arm aus, der elastisch ist.

Aufgabe der Erfindung ist, unter Vermeidung der Nachteile der bekannten Konstruktion die Schaffung eines Portalgerätes mit einer, im Vergleich zu bekannten Portalgeräten erhöhten Traglast bis zu 250 kg, bei einer Wiederholgenauigkeit von ±0,5 mm, bei einer Geschwindigkeit von 1 m/s, bei Verfahrwegen von 20 m in X-Richtung, 3 bis 6 m in Y-Richtung und 1,5 m in Z-Richtung, sowie bei einer Beschleunigung von 1 m/s².

Weiters wird angestrebt, eine hohe Tragkraft bei hoher Genauigkeit zu erzielen, wobei die Möglichkeit bestehen soll, die Führungen der Rollen mit geringerem Aufwand als bei den bekannten Konstruktionen herstellen zu können.

Diese Aufgabe wird dadurch gelöst, daß bei einem Industrieroboter der eingangs genannten Art, erfindungsgemäß auf dem Holm oder Träger auf zwei gegenüberliegenden Seiten jeweils eine prismatische Schiene angeordnet ist, wobei jede schiene zwei Seitenflächen aufweist, die schräge Laufflächen für zumindest zwei federbelastete Rollenpaare pro Schiene der Rollenführung des Wagens bilden, daß auch auf einem der Querträger der Brücke eine prismatische Schiene angeordnet ist, deren Seitenflächen schräge Laufflächen für zumindest zwei Rollenpaare des Wagens bilden, während auf dem anderen Querträger eine flache Schiene angeordnet ist, welche eine waagrechte Lauffläche für zumindest zwei Rollen des Wagens bildet, und daß bei der Verwendung von Längsträgern auch auf einem der Längsträger eine prismatische Schiene angeordnet ist, deren Seitenflächen schräge Laufflächen für zumindest zwei Rollenpaare der Brücke bilden, während auf dem anderen Längsträger eine flache Schiene angeordnet ist, welche eine waagrechte Lauffläche für zumindest zwei Rollen der Brücke bildet. Durch die Ausbildung und Anordnung der prismatischen Schienen beim Holm, sowie der prismatischen und flachen Schienen bei der Brücke und beiden Längsträgern wird eine hohe Tragkraft bei hoher Genauigkeit erzielt.

Einzelheiten der Erfindung werden nachfolgend anhand eines bevorzugten Ausführungsbeispiels mit Hilfe der Figuren beschrieben. Es zeigen

Fig. 1 eine schematische Darstellung eines Portalgerätes in perspektivischer Ansicht,

Fig. 2,3 und 4 ein Ausführungsbeispiel eines erfindungsgemäßen Portalgerätes in Auf-, Grund- und Seitenriß,

Fig. 5, 6 und 7 einen Rollenträger für eine Rolle, die auf einer flachen Schiene läuft in Auf-, Grund- und Seitenriß,

Fig. 8, 9 und 10 einen Rollenträger für ein Rollenpaar, das auf einer prismatischen Schiene läuft in Auf-, Grund- und Seitenriß,

Fig. 11, 12 und 13 einen gefederten Rollenträger für ein Rollenpaar, das auf einer prismatischen Schiene läuft in Auf-, Grund- und Seitenriß,

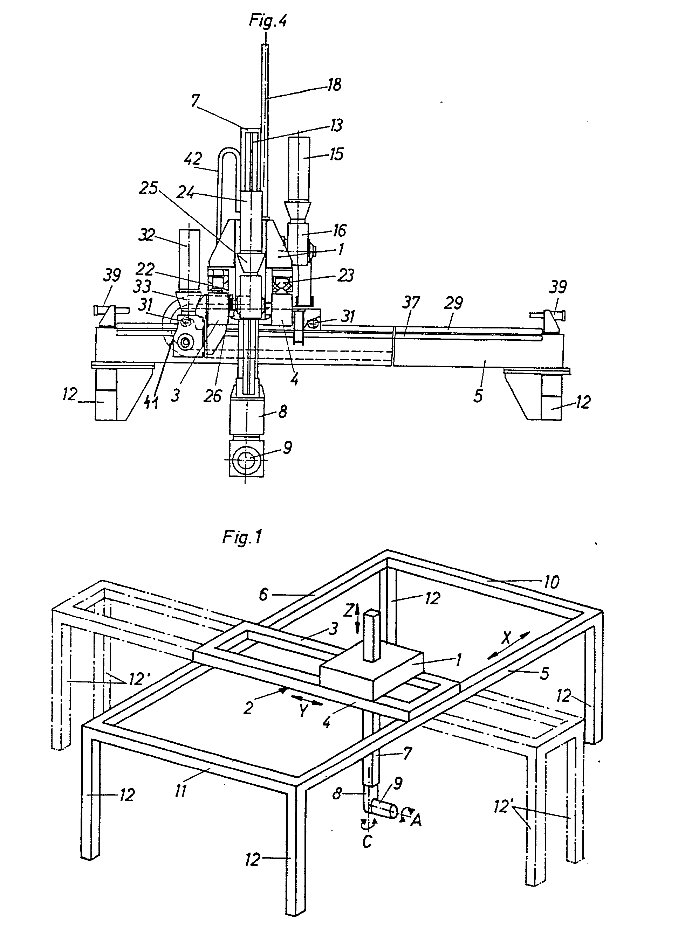

In Fig. 1 bezeichnet 1 einen Wagen, der auf einer Brücke 2 in Y-Richtung auf Rollen läuft. Die Brücke besteht aus zwei an den Enden verbundenen Querträge 3 und 4. Die Brücke ist an ihren Enden auf Rollen gelagert, die auf zwei Längsträgern 5 und 6 aufliegen, so daß die Brücke in X-Richtung verschiebbar ist. Eine lotrechte Rollenführung im Wagen 1 ermöglicht die Verschiebung eines Holms, Trägers 7, od.dgl. in Z-Richtung. Am unteren Ende des Holm 7 ist eine Greifvorrichtung (nicht dargestellt) vorgesehen, wobei gegebenenfalls zwischen dem Holm 7 und der Greifvorrichtung Antriebsvorrichtungen 8 und 9 vorgesehen sein können, die eine Drehung der Greifvorrichtung um die Drehachsen C und A ermöglichen. Die Längsträger sind an den Enden über Querträger 10 und 11 verbunden und ruhen auf Endstützen 12, um das Portal zu bilden. Erforderlichenfalls können zwischen den Endstützen Zwischenstützen (nicht dargestellt) angeordnet sind. Mit strichpunktierten Linien ist eine Verlängerung der Querträger 3 und 4 angedeutet, die ebenfalls an den Enden verbunden sind und auf Endstützen 12' ruhen, wobei die Längsträger 5 und 6 samt den Endstützen entfallen, sodaß der Wagen nur in Y-Richtung verschiebbar ist. Auch bei diesem Beispiel können zwischen den Endstützen 12' zusätzliche Zwischenstützen (nicht dargestellt) angeordnet sein. Auf deise Weise kann einerseits ein im Flächenportalgerät und anderseits ein Linienportalgerät realisiert werden.

Das in Fig. 1 bis 3 dargestellte Portalgerät ist beispielsweise als Flächen-Portalgerät ausgebildet, wobei für die zur Fig. 1 gleichen Teile die gleichen Bezugszeichen verwendet werden.

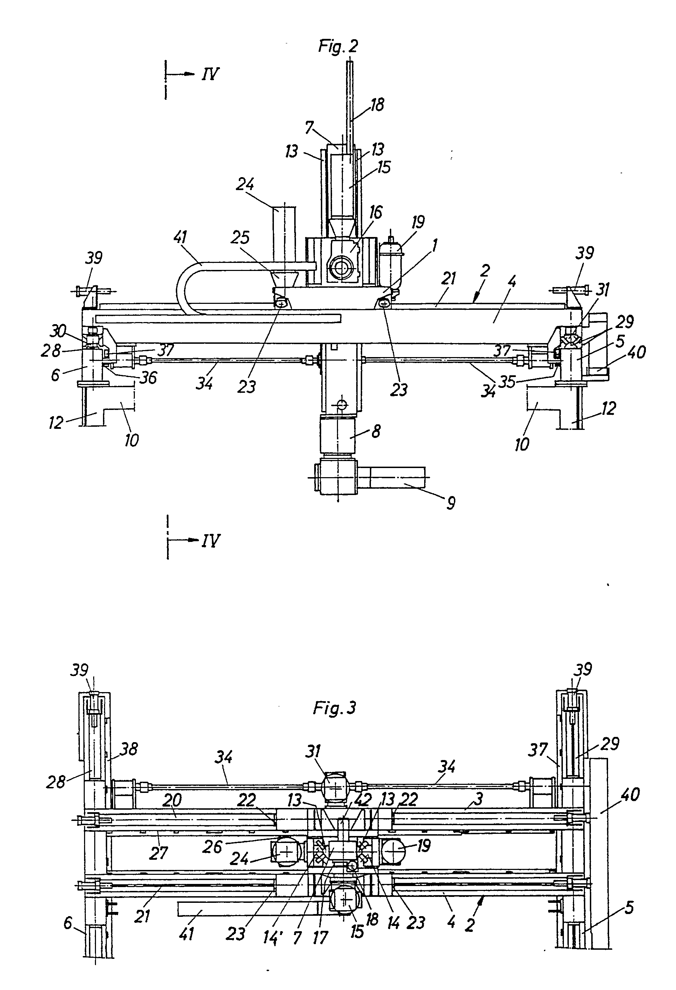

Wie aus Fig. 3 ersichtlich ist, weist der Holm 7 ein rechteckförmiges Hohlprofil auf, wobei auf zwei einander gegenüberliegenden Seiten des Holms 7 jeweils eine prismatische Schiene 13 angeordnet ist, die z.B. mittels Schrauben (nicht dargestellt) am Holm 7 befestigt ist. Im Wagen 1 sind vier Rollenpaare 14 bzw. 14' angeordnet, die eine Rollenführung für den Holm 7 bilden, inden jeweils zwei Rollenpaare 14 bzw. 14' übereinanderliegend auf den beiden prismatischen Schienen 13 anliegen. Wie spälter erläutert wird, sind auf einer Seite des Holms 7 die zwei Rollenpaare 14 starr gelagert, während auf der anderen Seite die zwei Rollenpaare 14' federnd gegen den Holm 7 abgestützt sind, damit mechanische Spannungen, bedingt durch Wärmeausdehnung od.dgl. kompensiert werden. Eine Antriebseinrichtung 15 treibt über ein Getriebe 16 ein Zahnrad 17 an, das in eine am Holm 7 in Längsrichtung befestigte Zahnstange (nicht dargestellt) eingreift, sodaß der Holm 7 in Z-Richtung verschiebbar ist. Damit der Holm 7 unter Last rascher und leichter bewegt werden kann, ist ein hydraulischer Zylinder 18 vorgesehen, dessen Kolbenstange mit dem Holm 7 verbunden ist, wie später erläutert wird.

Auf dem Querträger 3 ist eine flache Schiene 20, z.B. durch Schraubung befestigt, während auf dem Querträger 4 eine prismatische Scheine 21 ebenfalls durch Schraubung befestigt ist. Dementsprechend sind auf der Unterseite des Wagens 1 oberhalb des Querträgers 3 zwei Rollen 22 befestigt, die auf der flachen Schiene 20 laufen, während ebenfalls auf der Unterseite des Wagens 1 oberhalb des Querträgers 4 zwei Rollenpaare 23 befestigt sind, die auf der prismatischen Schiene 21 laufen. Die Ausbildung der Rollen 22 bzw. der Rollenpaare 23 wird später erläutert. Eine zweite Antriebseinrichtung 24 treibt über ein Getriebe 25 ein Zahnrad 26 an, das in eine am Querträger 3 in Längsrichtung befestigte Zahnstange 27 eingreift, sodaß der Wagen 1 in Y-Richtung verfahrbar ist. Erforderlichenfalls kann auch am Querträger 4 eine Zahnstange befestigt sein, in die ein zusätzliches vom Getriebe 25 angetriebenes Zahnrad eingreift. Auf dem Längsträger 6 ist eine flache Schiene 28 z.B. durch Schraubung befestigt, während auf dem Längsträger 5 eine prismatische Schiene 29 ebenfalls durch Schraubung befestigt ist.

Dementsprechend sind auf der Unterseite der Brücke 2 bzw. der Querträger 3 und 4 oberhalb des Längsträgers 6 zwei Rollen 30 befestigt, die auf der flachen Schiene 28 laufen, während ebenfalls auf der Unterseite der Brücke 2 bzw. der Querträger 3 und 4 oberhalb des Längsträgers 5 zwei Rollenpaare 31 befestigt sind, die auf der prismatischen Schiene 29 laufen. Eine dritte Antriebseinrichtung 32 treibt über ein Getriebe 33 und über je eine Kardanwelle 34 zwei Zahnräder 35 und 36 an, die in jeweils an den Längsträgern 5 und 6 befestigten Zahnstangen 37 und 38 eingreifen, sodaß die Brücke 2 in X-Richtung verfahrbar ist. Gegebenenfalls kann eine der Kardanwellen 34 bzw. Zahnräder 35, 36 und Zahnstangen 37, 38 entfallen, wenn z.B. die Brückenlänge relativ kurz ist.

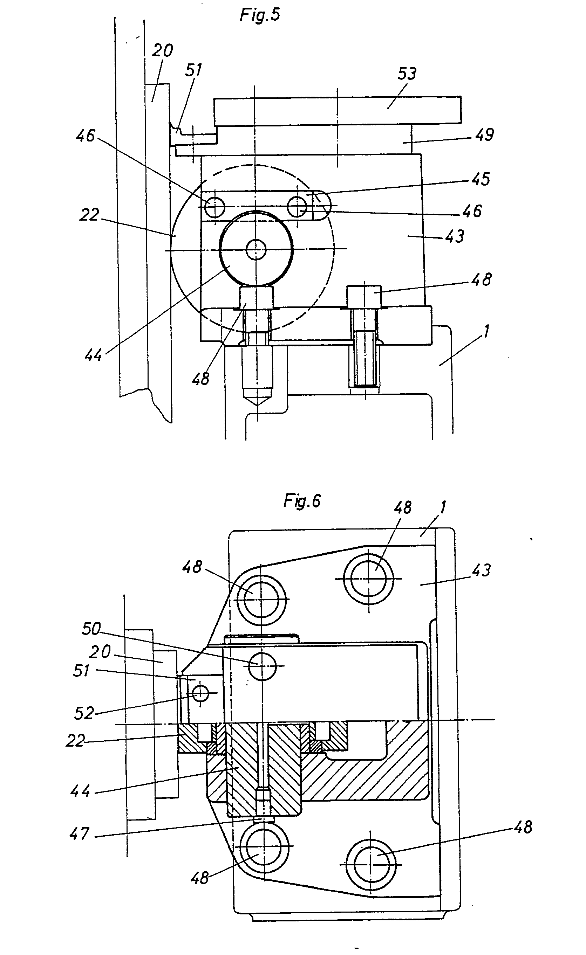

An den Enden der Brücke 2 bzw. der Längsträger 5 und 6 sind jeweils Stoßdämpfer 39 angebracht. Die Energiezufuhr zu den Antriebseinrichtungen 8, 9, 15, 24 und 32 erfolgt über flexible elektrische und/oder pneumatische Leitungen 40, 41 und 42. Als Antriebseinrichtungen werden vorzugsweise Elektromotore verwendet. Für die zur Steuerung bzw. Regelung der Antriebseinrichtung erforderliche Erfassung der Lage, Geschwindigkeit, Verzögerung etc. werden an sich bekannte Meßwertgeber, Sensoren, Annäherungsschalter usw. eingesetzt. Die Fig. 5 bis 7 zeigen den Aufbau eines Rollenträgers für die Rollen 22 und 30, die auf den flachen Schienen 20 und 30 des Querträgers 3 bzw. des Längsträgers 6 laufen. Ein Lagergehäuse 43 trägt einen Lagerbolzen 44, auf welchem z.B. die Rolle 22 befestigt ist, die vorzugsweise als Zylinderrollenlager ausgebildet ist. Der Lagerbolzen 44 ist in axialer Richtung durch ein Sicherungsblech 45 gesichert, welches mittels zwei Schrauben 46 am Lagergehäuse 43 befestigt ist. Über einen Schmiernippel 47 erfolgt die Schmierung des Zylinderrollenlagers. Mittels vier Schrauben 48 wird das Lagergehäuse 43 z.B. mit dem Wagen 1 verbunden. An der Stirnseite des Lagergehäuses 43 ist eine Abstreifenplatte 49 mittels zwei Schrauben 50 befestigt. Am Ende der Abstreiferplatte 49 ist ein Abstreifer 51 aus Gummi od.dgl. mittels zwei Schrauben 52 befestigt, wodurch ein auf der Schiene 20 haftender Schmutz oder Staub entfernt wird. Eine auf der Abstreiferplatte 49 mittels einer Schraube 53 angeschraubte Scheibe 54 dient als Angriffsfläche für die Stoßdämpfer 39 nach Fig. 1 bis 3.

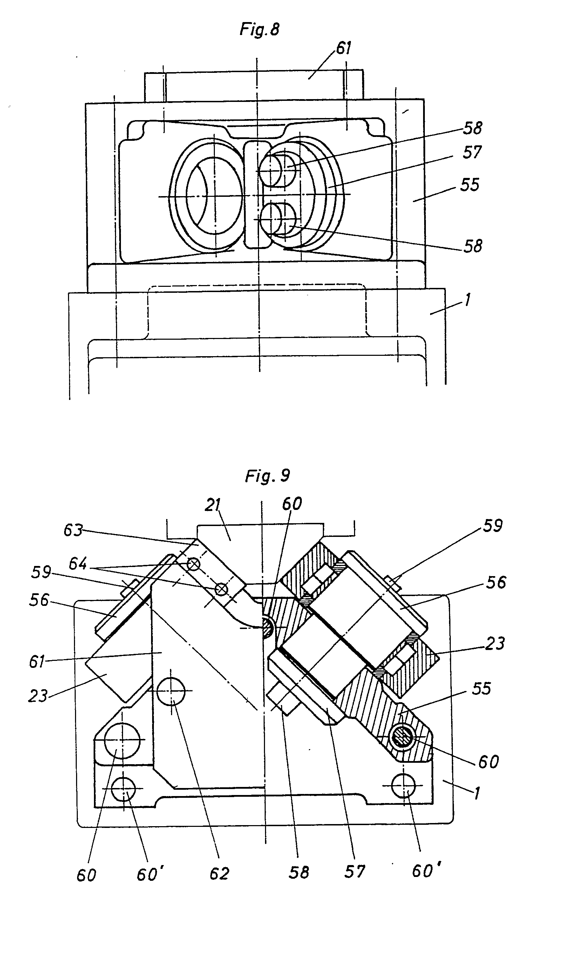

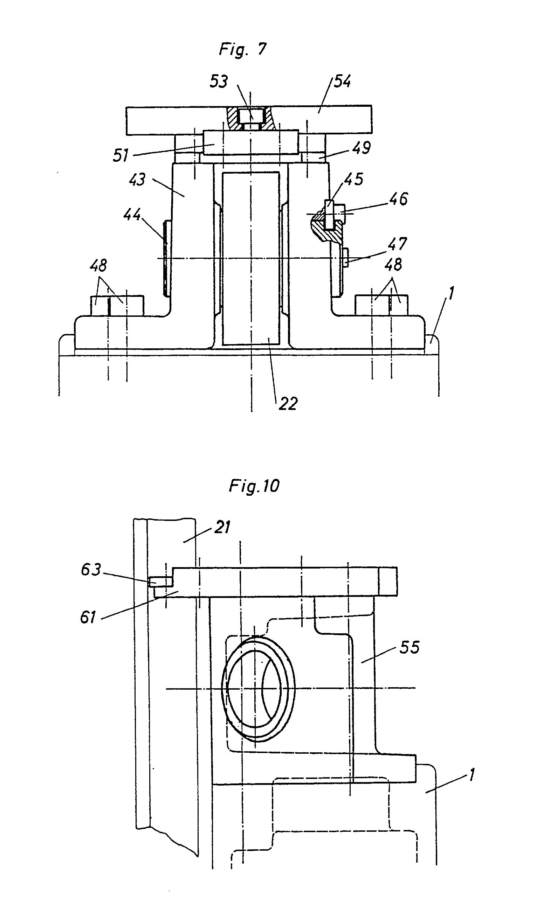

Die Fig. 8 bis 10 zeigen den Aufbau eines Rollenträgers für die Rollenpaare 14, 23 und 31, die auf den prismatischen Schienen 13, 21 und 29 des Holms 7, des Querträgers 4 und des Längsträgers 5 laufen. Ein Lagergehäuse 55 trägt zwei zueinander schräg versetzte Lagerbolzen 56, auf welchem z.B. das Rollenpaar 23 befestigt ist, dessen Rollen vorzugsweise als Zylinderrollenlager ausgebildet sind. Die Lagerbolzen 56 sind in axialer Richtung jeweils durch eine Platte 57 gesichert, welche am Lagergehäuse 55 aufliegt und mittels zweier Schrauben 58 am Lagerbolzen 56 angeschraubt ist. Über Schmiernippel 59 erfolgt die Schmierung der Zylinderrollenlager. Mittels drei Schrauben 60 und zwei Stiften 60' wird das Lagergehäuse 55 z.B. mit dem Wagen 1 verbunden. An der Stirnseite des Lagergehäuses 55 ist eine Abstreiferplatte 61 mittels zweier Schrauben 62 befestigt. Am Ende der Abstreiferplatte 61 sind zwei Abstreifer 63 aus Gummi od.dgl. jeweils mittels zwei Schrauben 64 befestigt.

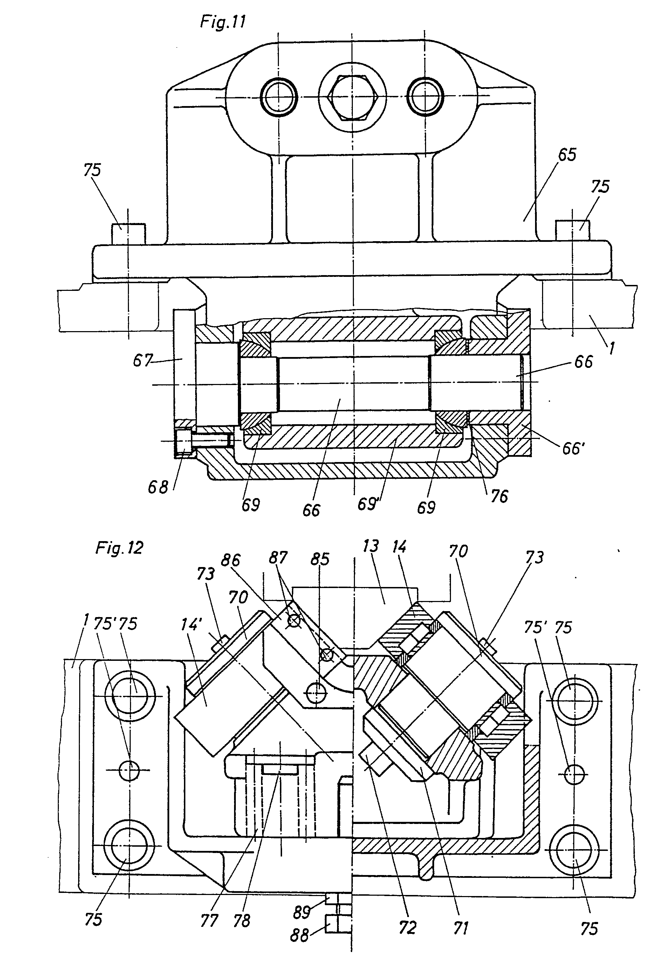

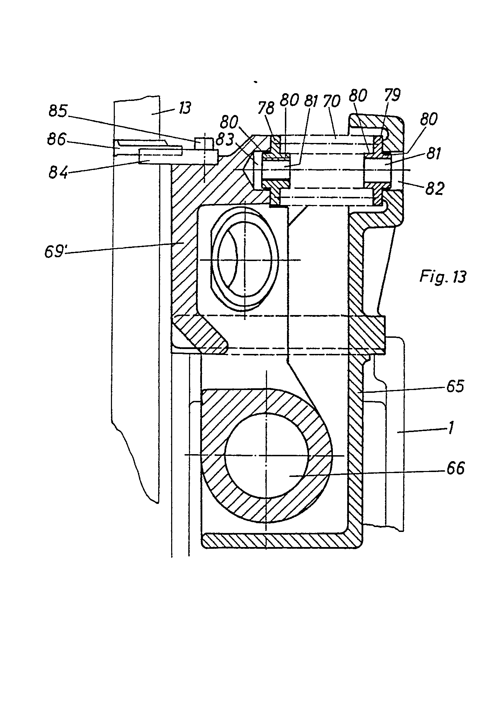

Die Fig. 11 bis 13 zeigen den Aufbau eines Rollenträgers für die gefederten Rollenpaare 14', die auf der prismatischen Schiene 13 auf einer Seite des Holms 7 laufen. Ein Lagergehäuse 65 trägt eine beidseitig im Lagergehäuse gelagerte Achse 66, die auf einer Seite in einer Lagerbüchse 66' gelagert ist und auf der anderen Seite einen Kopf 67 aufweist, der mittels einer Schraube 68 starr mit dem Lagergehäuse 65 verbunden ist. Der Rollenträger wird durch einen schwenkbar auf der Achse 66 auf zwei Schräggelenklagern 69 gelagerten Schwenkarm 69' gebildet, der an seinem freien Ende zwei zueinander schräg versetzt Lagerbolzen 70 trägt, auf welchen das Rollenpaar 14' befestigt ist, dessen Rollen vorzugsweise als Zylinderrollenlager ausgebildet sind. Die Lagerbolzen 70 sind in axialer Richtung jeweils durch eine Platte 71 gesichert, welche an Lagergehäuse 65 aufliegt und mittels zwei Schrauben 72 am Lagerbolzen 70 angeschraubt ist. Über Schmiernippel 73 erfolgt die Schmierung der Zylinderrollenlager. Das Lagergehäuse 65 weist einen mittigen Flansch 74 auf, der vier Schrauben 75 und zwei Stifte 75' trägt, über welche das Lagergehäuse mit dem Wagen 1 verbunden ist. Zwischen der Lagerbüchse 66' und dem daran anschließenden Schräggelenklager 69 können Paßscheiben 76 eingesetzt werden, damit die Mitte des Schwenkarms 69' bzw. des Rollenpaares 14' genau mit der Mitte der prismatischen Schiene 13 fluchtet.

Am freien Ende des Schwenkarms 69' greifen zwei Druckfedern 77 an, die sich anderseits gegen das Lagergehäuse 65 abstützen. Damit die Druckfedern 77 leicht montiert, demontiert und lagemäßig fixiert werden können, sind an den Enden der Druckfedern 77 scheibenförmige Druckstücke 78 und 79 angeordnet, die beidseitig eine zylindrische Verbreiterung 80 mit einer mittigen Bohrung 81 aufweisen, wobei die Bohrung 81 des Druckstückes 78, welches am Schwenkarm 69' aufliegt, mit einem Innengewinde versehen ist. Der Außendruchmesser der zylindrischen Verbreiterung 80 ist einerseits dem Innendurchmesser der Druckfedern 77, und anderseits dem einer Bohrung 82 im Lagergehäuse 65 und einer Sackbohrung 83 im Schwenkarm 69' angepaßt, sodaß die Druckfedern 77 lagemäßig fixiert sind. Zur Montage und Demontage der Druckfedern 77 wird eine Schraube (nicht dargestellt) über die Bohrung 82 und die Bohrung 81 eingeführt und in das Innengewinde des Druckstückes 78 eingeschraubt, wodurch die Druckfedern 77 zusammengedrückt werden können und somit der Schwenkarm 69' entlastet wird. Am außenseitigen Ende des Schwenkarms 69' ist wiederum eine Abstreiferplatte 84 mittels zwei Schrauben 85 angeschraubt, wobei an der Abstreiferplatte 84 zwei Abstreifer 86 mittels je zwei Schrauben 87 befestigt sind. Zur Begrenzung der Schwenkbewegung des Schwenkarms 69' ist eine Anschlagschraube 88 mit Gegenmutter 89 im Lagergehäuse 65 vorgesehen.

## Patentansprüche

1. Industrieroboter der Portalbauweise für Handhabungs- und/oder Fertigungs- und/oder Prüfaufgaben an einem Werkstück, Geräteteil od.dgl. in X-Richtung und/oder Y-Richtung sowie in Z-Richtung, bestehend aus einem mittels zumindest vier Rollen (22, 23) auf einer Brücke (2) fahrbar gelagerten Wagen (1), auf welchem eine Rollenführung für einen lotrecht verschiebbaren Holm oder Träger (7) angeordnet ist, an dessen unterem Ende eine Greifvorrichtung für das Werkstück od.dgl. angebracht ist, zwei im Abstand zueinander angeordneten und an den Enden miteinander verbundenen Querträgern (3, 4), welche die Brücke (2) bilden, die wahlweise an den Enden je auf Endstützen und erforderlichenfalls dazwischen auf Zwischenstützen abgestützt ist, oder an den Enden zumindest je zwei Rollen trägt, die auf zwei im rechten Winkel zur Brücke (2) und im Abstand zueinander angeordneten Längsträgern (5, 6) laufen, die an den Enden je auf Endstützen (12) und erforderlichenfalls dazwischen auf Zwischenstützen abgestützt sind, sowie mit Antriebseinrichtungen für die Bewegung des Wagens (1), des Holms oder Trägers (7), und gegebenenfalls der Brücke (12), wobei die Greifvorrichtung gegebenenfalls mit zumindest einer Antriebseinrichtung zum Verdrehen der Greifvorrichtung um zumindest eine Drehachse ausgestattet ist, dadurch gekennzeichnet, daß auf dem Holm oder Träger (7) auf zwei gegenüberliegenden Seiten jeweils eine prismatische Schiene (13) angeordnet ist, wobei jede Schiene zwei Seitenflächen aufweist, die schräge Laufflächen für zumindest zwei federbelastete Rollenpaare (14, 14') pro Schiene der Rollenführung des Wagens (1) bilden, daß auch auf einem der Querträger (4) der Brücke eine prismatische Schiene (21) angeordnet ist, deren Seitenflächen schräge Laufflächen für zumindest zwei Rollenpaare (23) des Wagens (1) bilden, während auf dem anderen Querträger (3) eine flache Schiene (20) angeordnet ist, welche eine waagrechte Lauffläche für zumindest zwei Rollen (22) des Wagens (1) bildet, und daß bei der Verwendung von Längsträgern (5, 6) auch auf einem der Längsträger (5) eine prismatische Schiene (29) angeordnet ist, deren Seitenflächen schräge Laufflächen für zumindest zwei Rollenpaare (31) der Brücke bilden, während auf dem anderen Längsträger (6) eine flache Schiene (28) angeordnet ist, welche eine waagrechte Lauffläche für zumindest zwei Rollen (30) der Brücke bildet.

2. Industrieroboter nach Anspruch 1, dadurch gekennzeichnet, daß die federnd gelagerten Rollenpaare (14') an einem, innerhalb eines Lagergehäuses (65) auf einer Achse (66) schwenkbar gelagerten Schwenkarm (69') auf zwei schräg zueinander versetzten Lagerbolzen (70) befestigt sind, wobei am freien Ende des Schwenkarms (69') zumindest eine Druckfeder (77) angreift, die sich anderseits am Lagergehäuse (65) abstützt.

3. Industrieroboter nach Anspruch 2, dadurch gekennzeichnet, daß an beiden Enden der Druckfeder ein scheibenförmiges Druckstück (78, 79) mit einer mittigen Bohrung (81) angeordnet ist, das beidseitig eine zylindrische Verbreiterung (80) aufweist, deren Außendurchmesser einerseits dem Innendurchmesser der Druckfeder (77) und anderseits dem einer Bohrung (82) im Lagergehäuse (65) und einer Sackbohrung (83) im Schwenkarm (69') angepaßt ist, sodaß die Druckfeder lagemäßig fixiert ist, wobei die Bohrung (81) des Druckstückes (78), welches am Schwenkarm (69') aufliegt, mit einem Innengewinde versehen ist.

4. Industrieroboter nach Anspruch 2, dadurch gekennzeichnet, daß die Achse (66) im Lagergehäuse (65) beidseitig auf Schräggelneklagern (69) gelagert ist, wobei bei zumindest einem der Schräggelenklager zumindest eine Paßscheibe (76) zum Einstellen des axialen Lagerspiels vorgesehen ist.

**Revendications**

1. Manipulateur industriel en forme de portique destiné à des travaux de manutention et/ou de fabrication et/ou de vérification d'une pièce d'ouvrage, d'un élément d'un appareil ou analogue dans la direction X et/ou Y ainsi que dans la direction Z, comprenant un chariot (1) monté mobile sur un portique (2) par au moins quatre rouleaux (22, 23), ledit chariot étant muni d'un guidage à rouleaux pour un montant ou support (7) pouvant être déplacé verticalement, sur l'extrémité inférieure duquel est monté un dispositif de préhension pour la pièce d'ouvrage ou analogue, deux traverses (3, 4) écartées l'une de l'autre et reliées l'une à l'autre par leurs extrémités, constituant le portique (2), ce dernier étant supporté, au choix, à ses extrémités, par des des pieds d'extrémité et si nécessaire par des pieds intermédiaires respectivement, situés entre ces derniers, ou ledit portique comporte à ses extrémités au moins deux rouleaux, respectivement, coulissant sur deux longerons (5, 6) écartés l'un de l'autre et disposés à angle droit par rapport au portique (2), longerons dont les extrémités sont supportées, respectivement, par des pieds d'extrémités (12) et si nécessaire par des pieds intermédiaires situés entre ces derniers, ainsi que des dispositifs d'entraînement pour le déplacement du chariot (1), du montant ou du support (7), et le cas échéant du portique (12), le dispositif de préhension étant muni, le cas échéant, d'au moins un dispositif d'entraînement pour sa rotation autour d'au moins un axe de rotation, caractérisé en ce que sur le montant ou le support (7), sur deux côtés opposés, est montée, respectivement, une glissière prismatique (13), chaque glissière présentant deux faces latérales formant des surfaces de roulement inclinées pour au moins deux paires de rouleaux soumis à l'action d'un ressort (14, 14') par glissière, du guidage de rouleau du chariot (1), en ce qu'une traverse (4) du portique est également munie d'une glissière prismatique (21), dont les faces latérales forment des surfaces de roulement inclinées pour au moins deux paires de rouleaux (23) du chariot (1), tandis que l'autre traverse (3) est munie d'une glissière plane (20) formant une surface de roulement horizontale pour au moins deux rouleaux (22) du chariot (1), et en ce que, dans le cas de l'utilisation de longerons (5, 6), l'un des longerons (5) est également muni d'une glissière prismatique (29), dont les faces latérales forment des surfaces de roulement inclinées pour au moins deux paires de rouleaux (31) du portique, tandis que l'autre longeron (6) est muni d'une glissière plane (28) formant une surface de roulement horizontale pour au moins deux rouleaux (30) du portique.

2. Manipulateur industriel suivant la revendication 1, caractérisé en ce que les paires de rouleaux (14') soumis à l'action d'un ressort sont fixées sur un bras pivotant (69') pouvant pivoter autour d'un axe (66) à l'intérieur d'un logement de palier (65) sur deux axes de support (70) décalés de façon oblique l'un par rapport à l'autre, l'extrémité libre du bras pivotant (69') étant soumise au moins à l'action d'un ressort de pression (77), placé lui-même dans le logement de palier (65).

3. Manipulateur industriel suivant la revendication 2, caractérisé en ce qu'il est prévu sur les deux extrémités du ressort de pression un élément de pression (78, 79) en forme de disque comportant un alésage central (81), ce dernier présentant des deux côtés un évasement cyindrique (80), dont le diamètre extérieur est adapté, d'une part, au diamètre intérieur du ressort de pression (77) et, d'autre part, à celui d'un alésage (82) dans le logement de palier (65) et d'un trou borgne (83) dans le bras pivotant (69'), de sorte que le ressort de pression 78 est maintenu dans sa position, l'alésage (81) de l'élément de pression (78), supporté par le bras pivotant (69'), étant muni d'un taraudage.

4. Manipulateur industriel suivant la revendication 2, caractérisé en ce que l'axe (66) est logé dans le logement de palier (65) par ses deux extrémités sur des articulations oscillantes (69), et au moins l'une des articulations oscillantes comporte une rondelle de compensation (76) pour régler le jeu axial de palier.

**Claims**

1. An industrial robot of portal construction for performing handling and/or manufacturing and/or testing tasks in the X direction and/or the Y direction and also in the Z direction on a workpiece, apparatus component or the like, comprising: a carriage (1) which is mounted to travel by means of at least four rollers (22, 23) on a bridge (2) and on which a roller guide for a vertically displaceable strut or beam (7) is disposed, at whose lower end a gripping device for the workpiece or the like is located; two spaced-out crossbeams (3, 4) interconnected at the ends and forming the bridge (2), which is carried optionally at each of the ends on end supports and if necessary therebetween on intermediate supports, or bears at each of the ends at least two rollers running on two longitudinal beams (5, 6) disposed at right angles to the bridge (2) and at a distance from one another and carried at each of the end on end supports (12) and if necessary therebetween on intermediate supports; and driving devices for the movement of the carriage (1), the strut or beam (7), and if necessary the bridge (2), the gripping device having at least one driving device for rotating the gripper device around at least one axis of rotation, characterized in that disposed on the strut or beam (7) on each of two opposite sides is a prismatic rail (13), each rail having two side faces forming inclined running surfaces for at least two spring-loaded pairs of rollers (14, 14') per rail of the roller guide of the carriage (1); disposed on one of the crossbeams (4) of the bridge is a prismatic rail (21) whose side faces form inclined running surfaces for at least two pairs of rollers (23) of the carriage (1), while disposed on the other crossbeam (3) is a flat rail (20) forming a horizontal running surface for at least two rollers (22) of the carriage (1); and when longitudinal beams (5, 6) are used also disposed on one (5) of the longitudinal beams is a prismatic rail (29) whose side faces form inclined running surfaces for at least two pairs of rollers (31) of the bridge, while disposed on the other longitudinal beam (6) is a flat rail (28) which forms a horizontal running surface for at least two rollers (30) of the bridge.

2. An industrial robot according to Claim 1, characterized in that the spring-mounted pairs of rollers (14') are attached to two bearing bolts (70) offset at an inclination to one another on a pivoting arm (69') pivotably mounted on a shaft (66) inside a bearing casing (65), the free end of the pivoting arm (69') being engaged by at least one compression spring (77) which bears on the other hand against the bearing casing (65).

3. An industrial robot according to Claim 2, characterized in that disposed at both ends of the compression spring is a disc-shaped thrust member (78, 79) which is formed with a central bore (81) and has on both sides a cylindrical widened portion (80) whose external diameter is so adapted on the one hand to the internal diameter of the compression spring (77) and on the other hand to the internal diameter of a bore (82) in the bearing casing (65) and a blind bore (83) in the pivoting arm (69') that the compression spring is fixed in position, the bore (81) of the thrust member (78), which bears against the pivoting arm (69'), being formed with an internal threading.

4. An industrial robot according to Claim 2, characterized in that the shaft (66) is supported in the bearing casing (65) on both sides in ball joints (69), with at least one of which a shim ring (76) is associated with the adjustment of the axial bearing clearance.

Fig.4

Fig.1

Fig. 2

Fig. 3

2

Fig.5

Fig.6

Fig.8

Fig. 9

Fig. 7

Fig.10

Fig.11

Fig.12

Fig. 13